# EUROPEAN PATENT SPECIFICATION

(11) **EP 4 122 988 B1**
(45) Date of publication and mention of the grant of the patent: **28.08.2024**
(21) Application number: 21187362.5
(22) Date of filing: 23.07.2021
(51) Int. Cl.: C09D 7/61

(54) **WATER BASED BARRIER COATING**
WASSERBASIERTE BARRIEREBESCHICHTUNG
REVÊTEMENT DE BARRIÈRE À BASE D'EAU

(43) Date of publication of application: 25.01.2023
(73) Proprietor: Cargill, Incorporated, Wayzata, MN 55391 (US)
(72) Inventor: THALHOFER, Richard, 40882 Ratingen (DE)
(74) Representative: Dottridge, Cass A.C.

(56) References cited:
- US-A1- 2004 254 332
- US-A1- 2007 113 997
- US-A1- 2016 348 318
- US-B2- 7 425 246

## Description

### FIELD

The present invention relates to aqueous coating composition for coating fiber-based substrates.

### BACKGROUND

Food containers and wrapping materials have been provided with grease and water resistant coatings for many years. US Patent No. 3,316,123 to Savina describes paper coated with a flexible grease and water-resistant ethyl acrylate acrylonitrile copolymer having a molecular weight in excess of about 1,000,000. This coated paper is stated to possess substantially no tendency towards blocking, even when maintained at temperatures as high as 190° F. for protracted periods of time, when the coating has a uniform substantial content of a thermoset amine-formaldehyde condensate.

A paper coating composition comprising one or more thickeners is described in US Published Pat. Appln No. 2007/0113997 to Glittenberg for use in the preparation of smoother, higher gloss paper products with improved optical properties such as opacity and whiteness and improved printing properties such as printing gloss. At least one of the one or more thickeners is a cold water swellable starch ester, methods of preparing such compositions and their use in coating paper products. US Published Pat. Appln No. 2013/004015 to Marakainen likewise describes a coating for coated papers used for printing. The coating compositions contain a starch mixture comprising a non-thinned starch and a thinned starch.

US 7,955,428 to Aoki describes a processed biodegradable article having excellent water resistance and rigidity, which can be used as a food container. The biodegradable composition used to produce the processed biodegradable article comprises 15-75% by mass starch, 5-50% by mass protein, 3-50% by mass cellulose fiber, 0.5-20% by mass polyphenols such as pyrogallol and gallic acid, and 0-5% by mass sodium chloride. Various starches that may be used are described on column 3.

Various acrylic emulsions are known for use as barrier coatings for grease, such as RHOBARR^{™} 110 Binder from Dow and RHOBARR^{™} 130 Binder from Dow. The Technical Data Sheets for both of these binders indicate that they have "good stability when blended with inorganic pigments such as clay, calcium carbonate, titanium dioxide and talc," and "good stability when blended with water soluble polymers such as starch, PVOH or rheology modifiers."

US 7,425,246 to Urscheler describes a method of manufacturing multilayer coated papers and paperboards, but excluding photographic papers and pressure sensitive copying papers, that are especially suitable for printing, packaging and labeling purposes, in which at least two curtain layers selected from aqueous emulsions or suspensions are formed into a composite, free-falling curtain and a continuous web of basepaper or baseboard is coated with the composite curtain, and paper or paperboard thereby obtainable.

US Published Pat. Appln No. US 2016/348318 A1 to Koenig appears to disclose a hydrophobic coated paper substrate formed from a paper substrate of paper fibers and internal sizing agent, a surface size layer of one or more surface sizing starches, optionally one or more non-starch hydrophobic surface sizing agents, and optionally one or more paper pigments, on at least one surface of the paper substrate, and at least one hydrophobic pigmented coating layer of a paper pigment component and a hydrophobic pigment binder component on at least one surface size layer.

US Published Pat. Appln No. US 2004/254332 A1 to Hayes appears to disclose aliphatic-aromatic polyetherester compositions, film, coatings and laminate articles made from the aliphatic-aromatic polyetherester compositions, and processes for producing the aliphatic-aromatic polyetherester compositions and articles.

US 7425246 B2 to Dow Global Technologies Inc appears to disclose a method of manufacturing multilayer coated papers and paperboards, but excluding photographic papers and pressure sensitive copying papers, that are especially suitable for printing, packaging and labeling purposes, in which at least two curtain layers selected from aqueous emulsions or suspensions are formed into a composite, free-falling curtain and a continuous web of basepaper or baseboard is coated with the composite curtain, and paper or paperboard thereby obtainable.

### SUMMARY

Food packaging material advantageously is resistant to oil, grease and water. However, providing fiber-based food packaging materials, such as paper and cardboard, with such resistance may be challenging. The technologies currently employed include coating the fiber-based materials with fluorochemicals or laminating the fiber-based materials plastic laminate materials. Both of these approaches are falling out of favor. Many jurisdictions are banning certain fluorochemicals. Likewise, there is a strong movement to ban plastics, because these materials are disfavored for environmental concerns and are difficult to recycle in the food packaging context for a number of reasons.

Alternative barrier coating materials, such as acrylate based latex coatings, face particular obstacles in that the resulting coatings are tacky and tend to block. Other obstacles include difficulties in coating due to the rheology, and challenges in sustainability because repulpability during recycling of post-consumer product is a problem when the coating generates tacky particles (so called "stickies"). Finally, coatings having a high acrylate content are expensive.

Providing a food packaging material that is resistant to oil, grease and water and additionally exhibits low tackiness is particularly advantageous, because if the food packaging material has a tacky surface, the sheet of material may stick to adjacent sheet surfaces. This causes problems in manufacture because it may not be possible to unspool a roll of the sheet material without damage to the substrate or transfer of an image printed on the back side of the sheet. Additionally, adjacent sheets provided to the user as a stack may stick together (i.e. "block") and may actually form a solid mass that is not possible to separate at all.

It has been found that acrylate based latex coatings may be modified with talc to reduce tackiness of the ultimate coating. However, acrylate based latex coatings that are modified with talc have been found to be unstable, so that they cannot be stored prior to coating as a stock item by a paper processor. Instead, coating compositions of this type are typically formulated on site on an as-needed basis. This forces a paper processor to have the equipment, mixing know-how, and a stock of the correct starting materials to be able to use this type of coating material.

Aqueous coating compositions for coating fiber-based products are provided that comprise an acrylic latex in an amount of from about 48wt% to about 80wt% based on dry solids content of the composition; talc in an amount of from about 20wt% to about 50wt% based on dry solids content of the composition; and chemically functionalized, cold water soluble, anionic starch in a dry solids content of from about 0.1 wt % to about 10wt%, wherein the aqueous composition has a total dry solids content of from about 30 to about 70 wt% based on the weight of the total composition and wherein the chemically functionalized, cold water soluble, anionic starch is selected from hydroxypropyl starch, carboxymethyl starch, acetylated high-amylose starch, starch acetate, starch maleate, starch octenylsuccinate, starch succinate, starch phthalate, hydroxypropyl high-amylose starch, crosslinked starch, starch phosphate, hydroxypropyl distarch phosphate, and mixtures thereof. These compositions are surprisingly storage stable, and may be conveniently provided to the manufacturer of coated fiber-based products used as food wrapping or packaging. The present aqueous coating compositions provide a convenient product that is ready to use by the paper processor without the need for mixing of coating composition ingredients on site at the location of coating. The ingredients used in the present coating compositions are relatively low cost, and provide excellent product performance in high grease resistance, low water absorptiveness, low tackiness and high flexibility in the resulting coated fiber-based products. Moreover, the resulting coated fiber-based products provide excellent sustainability, because the coatings may be prepared predominantly or exclusively from materials defined as bio-sourced materials. Additionally, the resulting coated fiber-based products may be prepared as readily recyclable materials, because the present coating composition may be formulated to substantially avoid generation of "stickies" that are problematic or prohibitive in obtaining successful post-consumer recycling outcomes.

Conventional barrier coating compositions may be formulated to have a high degree of solids content to provide sufficient barrier protection, with the result that the conventional barrier coating compositions are high in viscosity. Such conventional barrier coating compositions must be applied using coating equipment having blade coating or roll applicators that are designed to be able to coat such high viscosity coating compositions.

In an aspect, aqueous coating compositions as described herein can provide excellent stability in a coating composition having a low viscosity while having a sufficiently high solids content to be coated on a fiber-based substrate in a coating weight and coverage such that the final coated product exhibits excellent resistance to oil, grease and water. The ability to provide coating compositions with a high degree of solids ("DS") content at low viscosity provides a number of advantages, because the high DS content facilitates excellent coating coverage, while the low viscosity affords flexibility to be applied in various coating systems.

In contrast, it is possible to apply the present coating compositions using equipment initially designed for applying low viscosity coating compositions that would not be suitable as barrier coatings. The present barrier coatings thus uniquely many be applied to a substrate by coating equipment such as a size press or a film press that are limited in the type of materials that can be coated due to their inability to coat high viscosity formulations. For example, one cannot apply a coating having a viscosity greater than about 500 mPa-s using a typical size press. Likewise, one cannot apply a coating having a viscosity greater than about 1800 mPa-s using a typical film press.

Because the coating compositions can be formulated to comprise a high DS content (and therefore relatively less water to evaporate or remove), the resulting coatings advantageously are relatively easy to dry, using less energy as compared to like coating compositions having lower solids content. Additionally, the combination of high DS content with low viscosity provides coating compositions that may be coated at a faster coating speeds, because there is no need to slow down to permit evaporation or dissipation of the liquid in the coating composition during the coating process.

By incorporation of the starch as identified herein in quantities as described herein, the resulting coating composition is both storage stable and is easily applied to a fiber-based substrate by equipment that is readily available in many coating facilities, in contrast with traditional barrier coating compositions that require the use of equipment specifically designed to be capable of coating the more viscous coatings conventionally used as barrier coatings.

The invention is defined in the claims. The invention provides aqueous coating compositions for coating fiber-based products that comprise an acrylic latex in an amount of from about 48wt% to about 80wt% based on dry solids content of the composition; talc in an amount of from about 20wt% to about 50wt% based on dry solids content of the composition; and chemically functionalized, cold water soluble, anionic starch in a dry solids content of from about 0.1 wt % to about 10wt%, wherein the aqueous composition has a total dry solids content of from about 30 to about 70 wt% based on the weight of the total composition, wherein the chemically functionalized, cold water soluble, anionic starch is selected from hydroxypropyl starch, carboxymethyl starch, acetylated high-amylose starch, starch acetate, starch maleate, starch octenylsuccinate, starch succinate, starch phthalate, hydroxypropyl high-amylose starch, crosslinked starch, starch phosphate, hydroxypropyl distarch phosphate, and mixtures thereof and optionally wherein the aqueous composition has a Brookfield Viscosity of from about 200 to about 1800mPas @23°C at 100rpm. In an aspect, the aqueous coating composition has a Brookfield Viscosity of from about 200 to about 500mPas @23°C at 100rpm. In an aspect, the aqueous coating composition has a Brookfield Viscosity of from about 300 to about 1800mPas @23°C at 100rpm.

The aqueous coating composition for coating fiber-based products as defined in the claims is prepared by solubilizing the chemically functionalized, cold water soluble, anionic starch in water; mixing the solubilized cold water soluble starch with the talc to form an aqueous starch/talc composition; and mixing the aqueous starch/talc composition with the acrylic latex to form the aqueous coating composition.

The invention also provides the use of the coating composition as defined in the claims in making a coated fiber-based product..

### DETAILED DESCRIPTION

The aspects of the present disclosure described below are not intended to be exhaustive or to limit the disclosure to the precise forms disclosed in the following detailed description. Rather a purpose of the aspects chosen and described is by way of illustration or example, so that the appreciation and understanding by others skilled in the art of the general principles and practices of the present disclosure can be facilitated.

In an aspect, the coating composition comprises only materials that have been formally approved for food contact in the relevant jurisdiction of use.

The aqueous coating composition as defined in the claims comprises an acrylic latex in an amount of from about 48wt% to about 80wt% based on dry solids content of the composition.

In an aspect, the acrylic latex is an anionic 100% acrylic copolymer latex in an amount of from about 48wt% to about 80wt% based on dry solids content of the composition. In an aspect, the acrylic latex has a Brookfield Viscosity (LV, Spindle #3, 60 rpm) of from about 200 to about 400 cP @25°C. In an aspect, the acrylic latex has a glass transition temperature (Tg) of from about 5 to about 10°C. Anionic 100% acrylic copolymer latex materials are commercially available, such as RHOBARR^{™} 110 binder from The Dow Chemical Company.

In an aspect, the acrylic latex is an anionic styrene acrylic latex in an amount of from about 48wt% to about 80wt% based on dry solids content of the composition. In an aspect, the anionic styrene acrylic latex has a Brookfield Viscosity (LV, Spindle #3, 60 rpm) of from about 50 to about 350 cP @25°C. In an aspect, the anionic styrene acrylic latex has a glass transition temperature (Tg) of from about -20 to about 0°C. Anionic 100% acrylic copolymer latex materials are commercially available, such as RHOBARR^{™} 130 Barrier Coating from The Dow Chemical Company.

The acrylic latex is present in the aqueous coating composition in an amount of from about 48wt% to about 80wt% based on dry solids content of the composition. In an aspect, the acrylic latex is present in an amount of from about 60wt% to about 75wt% based on dry solids content of the composition. In an aspect, the acrylic latex is present in an amount of from about 65wt% to about 75wt% based on dry solids content of the composition.

For purposes of the present discussion, talc is a mineral material comprising hydrated magnesium silicate. In an aspect, the talc is a platy talc that has undergone a benefication process to ensure consistent properties.

The aqueous coating composition comprises talc in an amount of from about 20wt% to about 50wt% based on dry solids content of the composition. In an aspect, the talc is present in an amount of from about 20 wt% to about 40wt% based on dry solids content of the composition. In an aspect, the talc is present in an amount of from about 25 wt% to about 35wt% based on dry solids content of the composition.

In an aspect, the talc has an average particle size of from about 1 to 25 µm. In an aspect, the talc has an average particle size of from about 5 to 20 µm. In an aspect, the talc has an average particle size of from about 8 to 18 µm. In an aspect, the talc has an average particle size of from about 10 to 15 µm.

In an aspect, the talc is provided with a dispersing agent to assist in formulation of the aqueous coating compositions. Talcs are commercially available in various grades. Examples of suitable talcs include Finntalc^{™} C10 and C15 products, such as Finntalc^{™} C10B2 and Finntalc^{™} C15B2 from Elementis, London, UK.

In an aspect, the talc and the acrylic latex are present in the aqueous coating composition in a ratio of talc to acrylic latex of from 1:5 to 1:1 on a dry weight basis. In an aspect, the talc and the acrylic latex are present in the aqueous coating composition in a ratio of talc to acrylic latex of from 1:4 to 2:5 on a dry weight basis.

For purposes of the present discussion, a chemically functionalized, cold water soluble, anionic starch is obtained by introducing a substituent into a hydroxyl group of glucose constituting the starch. The chemically functionalized, cold water soluble, anionic starch of the invention has a dry solids content of from about 0.1wt % to about 10wt% and is selected from hydroxypropyl starch, carboxymethyl starch, acetylated high-amylose starch, starch acetate, starch maleate, starch octenylsuccinate, starch succinate, starch phthalate, hydroxypropyl high-amylose starch, crosslinked starch, starch phosphate, hydroxypropyl distarch phosphate, and mixtures thereof. In an aspect of the disclosure, the chemically functionalized, cold water soluble, anionic starch is prepared by reacting a starch by a reaction selected from etherification, esterification, and crosslinking with a crosslinking agent selected from phosphoric acid chloride, epichlorohydrin, and a phosphoric acid derivative. In an aspect of the disclosure, the chemically functionalized, cold water soluble, anionic starch is prepared by reacting a starch by a reaction selected from methylation, hydroxymethylation, hydroxypropylation, carboxymethylation, acetylation, fatty acylation, phosphorylation, and succinylation.

In an aspect, the chemically functionalized, cold water soluble, anionic starch may be a single starch, or may be mixtures of two or more kinds of starches.

It has been found that use of chemically functionalized, cold water soluble, anionic starch, even in the small relative amount present as described herein surprisingly affords excellent stability of the aqueous coating composition, even in comparison to like compositions containing natural starch (i.e. starches that are not chemically functionalized, cold water soluble, anionic starch). This stability is of significant benefit to the coated fiber-based product manufacturer, which can keep a supply of such coating compositions on hand in the plant for use without the need to formulate the coatings on site on an as-needed basis.

It further has been found that by incorporated a small amount of the chemically functionalized, cold water soluble, anionic starch, good stability can be achieved while at the same time providing an aqueous coating composition that has a low viscosity.

In an aspect, the chemically functionalized, cold water soluble, anionic starch is present in a dry solids content of from about 0.1wt % to about 8wt%. In an aspect, the chemically functionalized, cold water soluble, anionic starch is present in a dry solids content of from about 0.1wt % to about 5wt%. In an aspect, the chemically functionalized, cold water soluble, anionic starch is present in a dry solids content of from about 0.1wt % to about 2wt%.

For purposes of the present discussion and for clarity, a chemically functionalized, cold water soluble, anionic starch does not include starch modified only by cationization.

In an aspect of the disclosure, the chemically functionalized, cold water soluble, anionic starch is prepared by functionalizing a starch selected from maize starch, potato starch, sweet potato starch, wheat starch, rice starch, tapioca starch, sorghum starch. In an aspect of the disclosure, the content of amylose and the content of amylopectin contained in the starch are not particularly limited. In an aspect of the disclosure, the chemically functionalized, cold water soluble, anionic starch has increased content of amylose, such as high-amylose maize starch. In an aspect, the aqueous coating composition comprises only one type of chemically functionalized, cold water soluble, anionic starch. In an aspect, the aqueous coating composition comprises mixtures of two or more chemically functionalized, cold water soluble, anionic starches as defined in the claims.

In an aspect, the chemically functionalized, cold water soluble, anionic starch has a cold water-solubility of at least about 70%. In an aspect, the chemically functionalized, cold water soluble, anionic starch has a cold water-solubility of at least about 90%.

The aqueous composition has a total dry solids content of from about 30 to about 70 wt% based on the weight of the total composition. In an aspect, the composition has a total dry solids content of from about 40 to about 70 wt% of the total composition. In an aspect, the composition has a total dry solids content of from about 50 to about 70 wt% of the total composition.

In an aspect, the aqueous coating composition has a pH of from about 7 to 12. In an aspect, the aqueous coating composition has a pH of from about 8 to 11. In an aspect, the aqueous coating composition has a pH of from about 9 to 10. In an aspect, the aqueous coating composition has a pH of about 9.2.

As noted above, in an aspect, the aqueous coating composition has a Brookfield Viscosity of from about 200 to about 1500mPas @23°C at 100rpm.

In an aspect, the aqueous coating composition is formulated to have a Brookfield Viscosity suitable for use with a size press. In an aspect, the aqueous coating composition has a Brookfield Viscosity of from about 200 to about 500mPas @23°C at 100rpm. In an aspect, the aqueous coating composition has a Brookfield Viscosity of from about 300 to about 500mPas @23°C at 100rpm. In an aspect, the aqueous coating composition has a Brookfield Viscosity of from about 400 to about 500mPas @23°C at 100rpm.

In an aspect, the aqueous coating composition is formulated to have a Brookfield Viscosity suitable for use with a film press. In an aspect, the aqueous coating composition has a Brookfield Viscosity of from about 300 to about 1800mPas @23°C at 100rpm. In an aspect, the aqueous coating composition has a Brookfield Viscosity of from about 300 to about 1500mPas @23°C at 100rpm. In an aspect, the aqueous coating composition has a Brookfield Viscosity of from about 300 to about 1200mPas @23°C at 100rpm. In an aspect, the aqueous coating composition has a Brookfield Viscosity of from about 300 to about 1000mPas @23°C at 100rpm. In an aspect, the aqueous coating composition has a Brookfield Viscosity of from about 500 to about 1800mPas @23°C at 100rpm. In an aspect, the aqueous coating composition has a Brookfield Viscosity of from about 500 to about 1500mPas @23°C at 100rpm. In an aspect, the aqueous coating composition has a Brookfield Viscosity of from about 500 to about 1200mPas @23°C at 100rpm. In an aspect, the aqueous coating composition has a Brookfield Viscosity of from about 500 to about 1000mPas @23°C at 100rpm. In an aspect, the aqueous coating composition has a Brookfield Viscosity of from about 350 to about 600mPas @23°C at 100rpm.

In an aspect, the aqueous coating composition is formulated to provide a Water Retention Value (WRV) that facilitates coating uniformity the coating composition for the particular fiber substrate to be coated. In an aspect, the aqueous coating composition has a Water Retention Value of from about 50 to about 400 g/m². In an aspect, the aqueous coating composition has a Water Retention Value of from about 50 to about 300 g/m². In an aspect, the aqueous coating composition has a Water Retention Value of from about 70 to about 250 g/m². In an aspect, the aqueous coating composition has a Water Retention Value of from about 50 to about 100 g/m². In an aspect, the WRV is selected by adjustment of the starch content of the aqueous coating composition. In an aspect, the only ingredients of the aqueous coating composition are the acrylic latex, the talc, and the starch. Providing an aqueous coating composition that consists essentially of only three components is advantageous in the simplicity of the system and ease in inventory of raw materials. In an aspect, the WRV is selected by adjustment of the starch content in combination with addition of water retention value modifying components, such as carboxymethyl cellulose, xanthan gum, and the like.

In an aspect, the aqueous coating composition exhibits a shelf stability of greater than 150 hours at 23°C. In an aspect, the aqueous coating composition exhibits a shelf stability of greater than 200 hours at 23°C. In an aspect, the aqueous coating composition exhibits a stability of stability greater than 300 hours at 23°C. In an aspect, the aqueous coating composition exhibits a stability of stability greater than 500 hours at 23°C. In an aspect, the aqueous coating composition exhibits a stability of stability greater than 750 hours at 23°C. For purpose of the present discussion, shelf stability is determined by visual inspection in an Imhoff funnel to determine whether visually detectable sedimentation occurs.

In an aspect the aqueous coating composition for coating fiber-based products may be prepared by blending dry chemically functionalized, cold water soluble, anionic starch into an aqueous talc dispersion and stirring to dissolve the starch. In an aspect, the stirring is carried out under high shear conditions. In an aspect, the starch is dissolved at room temperature (e.g. 23°C.) without heating. In an aspect, water is added to the aqueous talc/starch composition to a dry substance content of from about 35 to 65%. In an aspect, water is added to the aqueous talc/starch composition to a dry substance content of from about 40 to 60%. In an aspect, water is added to the aqueous talc/starch composition to a dry substance content of from about 45 to 55%. In an aspect, the aqueous talc/starch composition is then screened to remove insoluble particles.

The aqueous starch/talc composition is then mixed with the acrylic latex to form the aqueous coating composition. In an aspect, the aqueous starch/talc composition is blended with the acrylic latex under moderate sheer conditions without heating.

A coated fiber-based product is prepared by coating a fiber-based substrate with the coating composition as described herein in an amount effective to provide a coated fiber-based product that exhibits:
a Grease Resistance Kit Rating of from 5 to 12,
a water absorptiveness of Cobb₆₀ 4 g/m² or less at 23°C.,
an Anton Paar "Wet tack" value of less than 1N., and
a Coating Flexibility such that the Fold Grease Resistance Kit Rating does not drop below 5.

In an aspect of the disclosure, a coated fiber-based product is provided that comprises:
a fiber-based substrate having a closed, continuous on a surface thereof, the coating comprising:
acrylic latex in an amount of from about 49wt% to about 79wt% based on dry solids content of the composition,
talc in an amount of from about 20wt% to about 50wt% based on dry solids content of the composition, and
chemically functionalized, cold water soluble, anionic starch in a dry solids content of from about 0. 1 wt % to about 2wt%;
Wherein the coated fiber-based product exhibits:
a Grease Resistance Kit Rating of from 5 to 12,
a water absorptiveness of Cobb₆₀ 4 g/m² or less at 23°C.,
an Anton Paar "Wet tack" value of less than 1N, and
a Coating Flexibility such that the Grease Resistance Kit Rating does not drop below 5 after creasing and folding of the coated fiber-based product.

For purposes of the present disclosure, the terms "paper" and "paper product" refer to sheet materials of any thickness, including, for example, single sheet paper, paperboard, cardboard and corrugated board. In an aspect the fiber-based substrate is a thin coated paper. In an aspect the fiber-based substrate is a flexible packaging sheet. In an aspect the fiber-based substrate is a rigid packaging substrate.

In an aspect, the fiber-based substrate has a basis weight of from about 20 g/ m² to about 45 g/m²; or wherein the fiber-based substrate has a basis weight of from about 30 g/m² to about 40 g/m².

In an aspect, the fiber-based substrate has a basis weight of from about 46 g/m² to about 75 g/m²; or wherein the fiber-based substrate has a basis weight of from about 48 g/m² to about 70 g/m².

In an aspect, the fiber-based substrate has a basis weight of from about 76 g/m² to about 100 g/m²; or wherein the fiber-based substrate has a basis weight of from about 80 g/m² to about 90 g/m².

In an aspect, the fiber-based substrate has a basis weight of from about 101 g/m² to about 400 g/m²; or wherein the fiber-based substrate has a basis weight of from about 150 g/m² to about 350 g/m²; or wherein the fiber-based substrate has a basis weight of from about 180 g/m² to about 300 g/m².

In an aspect, the fiber-based substrate has an initial Cobb₆₀ value of from 20 to 40.

The amount of coating composition to be applied to any given substrate is in part dependent on the surface characteristics of the substrates. Substrate materials that are very rough require more coating composition to achieve desired grease resistance properties than smooth substrates. Likewise, substrate materials that are very porous require more coating composition to achieve desired grease resistance properties than non-porous substrates.

In an aspect, the fiber-based substrate has an initial Bendtsen Roughness value of from 100 to 400 ml/min on one side. In an aspect, the fiber-based substrate has an initial Bendtsen Roughness value of from 401 to 1200 ml/min on one side. Bendtsen roughness is measured using ISO 8791/2.

In an aspect, the fiber-based substrate has an initial Bendtsen Porosity value of from 100 to 500 ml/min. In an aspect, the fiber-based substrate has an initial Bendtsen Porosity value of from 501 to 100 ml/min. In an aspect, the fiber-based substrate has an initial Bendtsen Porosity value of from 1001 to 1500 ml/min. Bendtsen porosity is measured using ISO 5636-3.

For purposes of the present disclosure, grease resistance of a coated substrate is measured under a Grease Resistance Test to determine the observed Grease Resistance Kit Rating in accordance with test methodology of TAPPI T559 Kit Test using a 3M Grease Resistance Kit - commonly known as the Kit test. In an aspect, the coated fiber-based product exhibits a Grease Resistance Kit Rating of from 5 to 12. In an aspect, the coated fiber-based product exhibits a Grease Resistance Kit Rating of from 6 to 12. In an aspect, the coated fiber-based product exhibits a Grease Resistance Kit Rating of from 7 to 12. In an aspect, the coated fiber-based product exhibits a Grease Resistance Kit Rating of from 8 to 12. In an aspect, the coated fiber-based product exhibits a Grease Resistance Kit Rating of from 9 to 12. In an aspect, the coated fiber-based product exhibits a Grease Resistance Kit Rating of from 10 to 12.

For purposes of the present disclosure, flexibility of a given coating composition is evaluated by coating the given coating composition on a standard substrate, which is defined as a 50 g/m² natural Kraft paper in a coating weight of 6 g/m². This sample is evaluated under the Grease Resistance Test as described above, but in two measurements. In the first measurement, the Grease Resistance Test is carried out as described above on a coated surface of the sample that has never been folded to determine that the Initial Grease Resistance Kit Rating meets the desired performance standard for the coating. In the second measurement, the sample is creased and folded, and the Grease Resistance Test is carried out as described above at the location of the fold to determine the Fold Grease Resistance Kit Rating.

A coating is deemed to be flexible if the sample exhibits an Initial Grease Resistance Kit Rating of at least 5, and the sample exhibits a Coating Flexibility such that the Fold Grease Resistance Kit Rating does not drop below 5. In an aspect, the coating composition exhibits a Coating Flexibility such that the Fold Grease Resistance Kit Rating does not drop below 6, or a Coating Flexibility such that the Fold Grease Resistance Kit Rating does not drop below 7, or a Coating Flexibility such that the Fold Grease Resistance Kit Rating does not drop below 8. It will be understood that, for example, in order to achieve a fold Grease Resistance Kit Rating of 8, the Initial Grease Resistance Kit Rating must be at least 8.

In an aspect, the difference between the Initial Grease Resistance Kit Rating and the Fold Grease Resistance Kit Rating is less than 4 Grease Resistance Kit Rating units. In an aspect, the difference between the Initial Grease Resistance Kit Rating and the Fold Grease Resistance Kit Rating is less than 3 Grease Resistance Kit Rating units. In an aspect, the difference between the Initial Grease Resistance Kit Rating and the Fold Grease Resistance Kit Rating is less than 2 Grease Resistance Kit Rating units. In an aspect, the difference between the Initial Grease Resistance Kit Rating and the Fold Grease Resistance Kit Rating is less than 1 Grease Resistance Kit Rating unit.

For purposes of the present disclosure, flexibility of a given coated fiber-based product is measured by conducting the above Coating Flexibility test on the coated fiber-based product to be prepared, whereby a coating composition is applied to a fiber-based substrate to be used in product production (i.e., not the standard paper substrate used above to evaluating performance of the coating alone).

In an aspect, the flexibility of the coated product as determined by the fold and crease challenge (the "Product Coating Flexibility") is such that the Fold Grease Resistance Kit Rating does not drop below 5. In an aspect, the coated product exhibits a Coating Flexibility such that the Fold Grease Resistance Kit Rating does not drop below 6, or a Coating Flexibility such that the Fold Grease Resistance Kit Rating does not drop below 7, or a Coating Flexibility such that the Fold Grease Resistance Kit Rating does not drop below 8.

In an aspect, the difference between the Initial Grease Resistance Kit Rating and the Fold Grease Resistance Kit Rating is less than 4 Grease Resistance Kit Rating units. In an aspect, the difference between the Initial Grease Resistance Kit Rating and the Fold Grease Resistance Kit Rating is less than 3 Grease Resistance Kit Rating units. In an aspect, the difference between the Initial Grease Resistance Kit Rating and the Fold Grease Resistance Kit Rating is less than 2 Grease Resistance Kit Rating units. In an aspect, the difference between the Initial Grease Resistance Kit Rating and the Fold Grease Resistance Kit Rating is less than 1 Grease Resistance Kit Rating unit.

For purposes of the present disclosure, water absorptiveness of a coated substrate is measured in accordance with the Cobb test (ISO 535:2014). This test describes the water uptake of 1m² of paper in a defined time. Testing of the substrate for a time of 60 seconds is identified as a Cobb₆₀ test. In an aspect, the coated fiber-based product exhibits a water absorptiveness of Cobb₆₀ 4 g/m² or less at 23°C. In an aspect, the coated fiber-based product exhibits a water absorptiveness of Cobb₆₀ 2 g/m² or less at 23°C. In an aspect, the coated fiber-based product exhibits a water absorptiveness of Cobb₆₀ 1 g/m² or less at 23°C.

For purposes of the present disclosure, tackiness of a coated substrate is determined by measuring the force required to separate two coated sheets of paper, which force value is identified as the Anton Paar "Wet tack" value. The Anton Paar "Wet tack" value is measured by an Anton Paar Rheometer MCR 101 device comprising a single use plate measuring system (model D-PP15/AL/S07) with a measuring axis (D-CP/PP7). A first coated sample is affixed to the measuring head of the rheometer, and a second coated sample is affixed to the plate, so during the measurement a coated side of one sample contacts the uncoated side of the other sample. The measuring axis is suspended and moved to a lifting position of 15mm. 2µl H2O are pipetted onto the sample adhered to the plate and the measuring geometry is moved to press the samples together with a constant normal force of 1 N for a time of 10 seconds. The Normal Force required to separate the two samples is measured at a temperature of 25 ° C.

In an aspect, the coated fiber-based product exhibits an Anton Paar "Wet tack" Normal Force value of less than 1 N. In an aspect, the coated fiber-based product exhibits an Anton Paar "Wet tack" Normal Force value of less than 0.7 N In an aspect, the coated fiber-based product exhibits an Anton Paar "Wet tack" Normal Force value of less than 0.5 N. In an aspect, the coated fiber-based product exhibits an Anton Paar "Wet tack" Normal Force value of less than 0.3 N.

The coated fiber-based product as described herein can be prepared by providing a fiber-based substrate having a first and second major surface, and coating the first major surface with the aqueous coating composition as described herein. In an aspect, the first major surface is provided with the aqueous coating composition at a coating weight of from 3 g/m² to 30 g/m². In an aspect, the first major surface is provided with the aqueous coating composition at a coating weight of from 5 g/m² to 25 g/m². In an aspect, the first major surface is provided with the aqueous coating composition at a coating weight of from 5 g/m² to 20 g/m². In an aspect, the first major surface is provided with the aqueous coating composition at a coating weight of from 5 g/m² to 15 g/m².

In an aspect, the second major surface of the fiber-based substrate is additionally coated with the aqueous coating composition as described herein. In an aspect, the second major surface is provided with the aqueous coating composition at a coating weight of from 3 g/m² to 30 g/m². In an aspect, the second major surface is provided with the aqueous coating composition at a coating weight of from 5 g/m² to 25 g/m². In an aspect, the second major surface is provided with the aqueous coating composition at a coating weight of from 5 g/m² to 20 g/m². In an aspect, the second major surface is provided with the aqueous coating composition at a coating weight of from 5 g/m² to 15 g/m². In an aspect, the first and second major surfaces are provided with the aqueous coating composition at the same coating weight

In an aspect, the first major surface is sized before the coating with the aqueous coating composition; or the first major surface and the second major surface are sized before the coating with the aqueous coating composition.

The coating composition as described herein can be applied to a paper substrate by any suitable known coating technique, such as, for example, air knife coating, rod coating, bar coating, wire bar coating, spray coating, brush coating, cast coating, flexible blade coating, gravure coating, jet applicator coating, extrusion coating, short dwell coating, slide hopper coating, curtain coating, flexographic coating, size-press coating, gate roll coating, reverse roll coating and transfer roll coating. In an aspect, the coating composition is applied as a single coat to a major surface of the paper substrate. In an aspect, the coating composition is applied a plurality of times to a major surface of the paper substrate. In an aspect, the coating composition is applied as a single coat to both sides (i.e. both major surfaces) of the paper substrate. In an aspect, the coating composition is applied a plurality of times to both sides (i.e. both major surfaces) of the paper substrate.

### EXAMPLES

### Any examples falling outside the scope of the claims is provided for comparative purposes.

### A. Preparation of aqueous coating compositions

Coating compositions were prepared by dry blending starch or sucrose ester (if present) into an aqueous slurry of talc under shear conditions at room temperature (e.g. 23°C.) without heating to dissolve the starch. The aqueous starch/talc composition was then mixed with an acrylic latex to form the aqueous coating composition in the amounts indicated in Table 1. Physical properties of these compositions are also reported in Table 1.

**Table 1.**

| | Comparative Example 1 | Comparative Example 2 | Example 1 | Example 2 | Rhobarr 110 | Rhobarr 130 |
|---|---|---|---|---|---|---|
| Rhobarr 110 acrylic latex | | 70% | 50% | 70% | 100% | |
| Rhobarr 130 Acrylic latex | | | | | | 100% |
| 85% Rhobarr 110 acrylic latex + 15%Sucrose ester detackifier | 70% | | | | | |
| | | | | | | |
| Finntalc | 30% | 30% | 45% | 28.5% | | |
| Cargill Instant 12650 hydroxypropylated Starch | 0 | 0 | 5% | 1.5% | | |
| | | | | | | |
| PROPERTIES: | | | | | | |
| Dry substance content | 45.36 | 44.9 | 52.2 | 50.1 | 50 | 41 |
| Brookfield Viscosity | 60 | 36 | 520 | 408 | 145 | 145 |
| Stability | Unstable within 4 hrs | Unstable within minutes | Stable >500 hrs | Stable >500 hrs | Stable | Stable |

### B. Preparation of coated 50 g/m² sheet

The aqueous coating compositions as described above were coated on a 50 g/m² cellulose virgin fiber paper, machine glazed on one side having a porosity of from about 695 ml/min and a Bendtsen Roughness of 165 ml/min on the glazed side at the indicated coating weights.

### C. Preparation of coated 200 g/m² sheet

The aqueous coating compositions as described above were coated on a 200 g/m² Tambrite^{™} paper from Stora Enso paper having a porosity of about 0.3 ml/min and a Bendtsen Roughness of 240 ml/min at the indicated coating weights.

### D. Properties of Coated Sheets

The sheets Sections A and B were evaluated for properties of water absorption, grease resistance and product Coating Flexibility, with the results as shown in Table 2 below.

**Table 2.**

| | **Comparative Example 1** | **Comparative Example 2** | **Example 1** | **Example 2** | **Rhobarr 110** | **Rhobarr 130** |
|---|---|---|---|---|---|---|
| **Coated on substrate** | 50 g/m² | 50 g/m² | 200 g/m² | 50 g/m² | 50 g/m² | 50 g/m² |
| **Coating weight** | 5.3 | 6.4 | 7.3 | 6.3 | 5.8 | 6.8 |
| **Cobb₆₀** | 0.3 | 0 | 2.9 | 2.0 | 2.2 | 1.7 |
| **Grease Resistance Kit Rating** | 8 | 12 | 9 | 8 | 11.0 | 8.5 |
| **Fold Grease Resistance Kit Rating** | 7.5 | 11 | 9 | 7 | 10 | 8.5 |
| **Anton Barr Tackiness value** | 0.77 | 0.43 | 0.32 | | 4.05 | 1.19 |

The above examples show that acrylic latex coating compositions without added talc are unacceptably tacky. Addition of talc to acrylic latex coating compositions reduces tackiness, but results in unstable compositions. Addition of starch to talc-containing acrylic latex coating compositions enhances stability of the composition and maintains a favorable degree of solids level. The viscosity of the resulting coating composition is not substantially increased. Excellent grease resistance properties are obtained even at low coating weight. Addition of starch does not adversely affect anti-tackifying effect of talc.

As used herein, the terms "about" or "approximately" mean within an acceptable range for the particular parameter specified as determined by one of ordinary skill in the art, which will depend in part on how the value is measured or determined, e.g., the limitations of the sample preparation and measurement system. Examples of such limitations include preparing the sample in a wet versus a dry environment, different instruments, variations in sample height, and differing requirements in signal-to-noise ratios. For example, "about" can mean greater or lesser than the value or range of values stated by 1/10 of the stated values, but is not intended to limit any value or range of values to only this broader definition. For instance, a concentration value of about 30% means a concentration between 27% and 33%. Each value or range of values preceded by the term "about" is also intended to encompass the embodiment of the stated absolute value or range of values. Alternatively, particularly with respect to biological systems or processes, the term can mean within an order of magnitude, preferably within 5-fold, and more preferably within 2-fold, of a value.
Throughout this specification and claims, unless the context requires otherwise, the word "comprise", and variations such as "comprises" and "comprising", will be understood to imply the inclusion of a stated integer or step or group of integers or steps but not the exclusion of any other integer or step or group of integer or step. When used herein "consisting of" excludes any element, step, or ingredient not specified in the claim element. When used herein, "consisting essentially of" does not exclude materials or steps that do not materially affect the basic and novel characteristics of the claim. In the present disclosure of various embodiments, any of the terms "comprising", "consisting essentially of" and "consisting of" used in the description of an embodiment may be replaced with either of the other two terms.

## Claims

1. An aqueous coating composition for coating fiber-based substrates comprises:
acrylic latex in an amount of from about 48wt% to about 80wt% based on dry solids content of the composition;
talc in an amount of from about 20wt% to about 50wt% based on dry solids content of the composition; and
chemically functionalized, cold water soluble, anionic starch in a dry solids content of from about 0.1wt % to about 10wt%;
wherein the aqueous composition has a total dry solids content of from about 30 to about 70 wt% based on the weight of the total composition, wherein the chemically functionalized, cold water soluble, anionic starch is selected from hydroxypropyl starch, carboxymethyl starch, acetylated high-amylose starch, starch acetate, starch maleate, starch octenylsuccinate, starch succinate, starch phthalate, hydroxypropyl high-amylose starch, crosslinked starch, starch phosphate, hydroxypropyl distarch phosphate, and mixtures thereof.

2. The aqueous coating composition of claim 1, wherein the chemically functionalized, cold water soluble, anionic starch is present in a dry solids content of from about 0.1wt % to about 8wt%; or wherein the chemically functionalized, cold water soluble, anionic starch is present in a dry solids content of from about 0.1wt % to about 5wt%; or wherein the chemically functionalized, cold water soluble, anionic starch is present in a dry solids content of from about 0.1wt % to about 2wt%.

3. The aqueous coating composition of claim 1 or 2, wherein
the acrylic latex is present in an amount of from about 60wt% to about 75wt% based on dry solids content of the composition; or the acrylic latex is present in an amount of from about 65wt% to about 75wt% based on dry solids content of the composition; and
the talc is present in an amount of from about 20 wt% to about 40wt% based on dry solids content of the composition; or the talc is present in an amount of from about 25 wt% to about 35wt% based on dry solids content of the composition.

4. The aqueous coating composition of any one of claims 1-3, wherein the talc and the acrylic latex are present in a ratio of talc to acrylic latex of from 1:5 to 1: 1 on a weight basis; or wherein the talc and the acrylic latex are present in a ratio of talc to acrylic latex of from 1:4 to 2:5 on a weight basis.

5. The aqueous coating composition of any one of claims 1-4, wherein the composition has a total dry solids content of from about 40 to about 70 wt% of the total composition; or wherein the composition has a total dry solids content of from about 50 to about 70 wt% of the total composition.

6. The aqueous coating composition of any one of claims 1-5, wherein the aqueous coating composition has a Brookfield Viscosity of from about 200 to about 500mPas at23°C at 100rpm; or wherein the aqueous coating composition has a Brookfield Viscosity of from about 300 to about 500mPas at23°C at 100rpm; or wherein the aqueous coating composition has a Brookfield Viscosity of from about 400 to about 500mPas at23°C at 100rpm.

7. The aqueous coating composition of any one of claims 1-5, wherein the aqueous coating composition has a Brookfield Viscosity of from about 300 to about 1800mPas at23°C at 100rpm; or wherein the aqueous coating composition has a Brookfield Viscosity of from about 300 to about 1500mPas at23°C at 100rpm; or wherein the aqueous coating composition has a Brookfield Viscosity of from about 300 to about 1200mPas at23°C at 100rpm; or wherein the aqueous coating composition has a Brookfield Viscosity of from about 300 to about 1000mPas at23°C at 100rpm; or wherein the aqueous coating composition has a Brookfield Viscosity of from about 500 to about 1800mPas at23°C at 100rpm; or wherein the aqueous coating composition has a Brookfield Viscosity of from about 500 to about 1500mPas at23°C at 100rpm; or wherein the aqueous coating composition has a Brookfield Viscosity of from about 500 to about 1200mPas at23°C at 100rpm; or wherein the aqueous coating composition has a Brookfield Viscosity of from about 500 to about 1000mPas at23°C at 100rpm; or wherein the aqueous coating composition has a Brookfield Viscosity of from about 350 to about 600mPas at23°C at 100rpm.

8. The aqueous coating composition of any one of claims 1-7, wherein the composition has a water retention value of from about 50 to about 400 g/m²; or wherein the aqueous coating composition has a Water Retention Value of from about 50 to about g/m²; or wherein the aqueous coating composition has a Water Retention Value of from about 70 to about 250 g g/m²; or wherein the aqueous coating composition has a Water Retention Value of from about 50 to about 100 g/m².

9. The aqueous coating composition of any one of claims 1-8, wherein the composition exhibits a shelf stability greater than 150 hours at 23°C; or wherein the composition exhibits a shelf stability greater than 200 hours at 23°C; or wherein the composition exhibits a shelf stability greater than 300 hours at 23°C; or wherein the composition exhibits a shelf stability greater than 500 hours at 23°C; or wherein the composition exhibits a shelf stability greater than 750 hours at 23°C.

10. The aqueous coating composition of any one of claims 1-9, wherein the composition when coated on a 50 g/m² natural Kraft paper in a coating weight of 6 g/m² has a Coating Flexibility such that the Fold Grease Resistance Kit Rating does not drop below 5; or wherein the coating composition exhibits a Coating Flexibility such that the Fold Grease Resistance Kit Rating does not drop below 6, or the coating composition exhibits a Coating Flexibility such that the Fold Grease Resistance Kit Rating does not drop below 7, or the coating composition exhibits a Coating Flexibility such that the Fold Grease Resistance Kit Rating does not drop below 8.

11. The aqueous coating composition of any one of claims 1-10, wherein the talc has an average particle size of from about 1 to 25 µm; or wherein the talc has an average particle size of from about 5 to 20 µm; or wherein the talc has an average particle size of from about 8 to 18 µm; or wherein the talc has an average particle size of from about 10 to 15 µm.

12. The aqueous coating composition of any one of claims 1-11, wherein the acrylic latex is selected from an anionic 100% acrylic copolymer latex and an anionic styrene acrylic latex.

13. A method of making the aqueous coating composition for coating fiber-based products of any one of claims 1-12 comprising:
solubilizing the chemically functionalized, cold water soluble, anionic starch in water;
mixing the solubilized cold water soluble starch with the talc to form an aqueous starch/talc composition; and
mixing the aqueous starch/talc composition with the acrylic latex to form the aqueous coating composition.

14. Use of a coating composition of any one of claims 1-13 in making a coated fiber-based product.

## Patentansprüche

1. Wässrige Beschichtungszusammensetzung zum Beschichten von faserbasierten Substraten, die umfasst:
Acryllatex in einer Menge von etwa zu 48 Gew.-% bis etwa 80 Gew.-% bezogen auf einen Trockensubstanzgehalt der Zusammensetzung;
Talk in einer Menge von etwa zu 20 Gew.-% bis etwa 50 Gew.-% bezogen auf den Trockensubstanzgehalt der Zusammensetzung; und
chemisch funktionalisierte, kaltwasserlösliche, anionische Stärke mit einem Trockensubstanzgehalt von etwa zu 0,1 Gew.-% bis etwa 10 Gew.-%;
wobei die wässrige Zusammensetzung einen Gesamttrockensubstanzgehalt von etwa zu 30 bis etwa 70 Gew.-%, bezogen auf das Gewicht der Gesamtzusammensetzung, aufweist, wobei die chemisch funktionalisierte, kaltwasserlösliche, anionische Stärke aus Hydroxypropylstärke, Carboxymethylstärke, acetylierter amylosereicher Stärke, Stärkeacetat, Stärkemaleat, Stärkeoctenylsuccinat, Stärkesuccinat, Stärkephthalat, amylosereicher Hydroxypropylstärke, vernetzter Stärke, Stärkephosphat, Hydroxypropyldistärkephosphat und Mischungen davon ausgewählt ist.

2. Wässrige Beschichtungszusammensetzung nach Anspruch 1, wobei die chemisch funktionalisierte, kaltwasserlösliche, anionische Stärke in einem Trockensubstanzgehalt von etwa zu 0,1 Gew.-% bis etwa 8 Gew.-% vorhanden ist; oder wobei die chemisch funktionalisierte, kaltwasserlösliche, anionische Stärke in einem Trockensubstanzgehalt von etwa zu 0,1 Gew.-% bis etwa 5 Gew.-% vorhanden ist; oder wobei die chemisch funktionalisierte, kaltwasserlösliche, anionische Stärke in einem Trockensubstanzgehalt von etwa zu 0,1 Gew.-% bis etwa 2 Gew.-% vorhanden ist.

3. Wässrige Beschichtungszusammensetzung nach Anspruch 1 oder 2, wobei
der Acryllatex in einer Menge von etwa zu 60 Gew.-% bis etwa 75 Gew.-% bezogen auf den Trockensubstanzgehalt der Zusammensetzung vorhanden ist; oder der Acryllatex in einer Menge von etwa zu 65 Gew.-% bis etwa 75 Gew.-% bezogen auf den Trockensubstanzgehalt der Zusammensetzung vorhanden ist; und
der Talk in einer Menge von etwa zu 20 Gew.-% bis etwa 40 Gew.-% bezogen auf den Trockensubstanzgehalt der Zusammensetzung vorhanden ist; oder der Talk in einer Menge von etwa zu 25 Gew.-% bis etwa 35 Gew.-% bezogen auf den Trockensubstanzgehalt der Zusammensetzung vorhanden ist.

4. Wässrige Beschichtungszusammensetzung nach einem der Ansprüche 1 bis 3, wobei der Talk und der Acryllatex in einem Verhältnis von Talk zu Acryllatex von 1 : 5 bis 1 : 1 auf einer Gewichtsbasis vorhanden sind; oder wobei der Talk und der Acryllatex in einem Verhältnis von Talk zu Acryllatex von 1 : 4 bis 2 : 5 auf einer Gewichtsbasis vorhanden sind.

5. Wässrige Beschichtungszusammensetzung nach einem der Ansprüche 1 bis 4, wobei die Zusammensetzung einen Gesamttrockensubstanzgehalt von etwa zu 40 bis etwa 70 Gew.-% der Gesamtzusammensetzung aufweist; oder wobei die Zusammensetzung einen Gesamttrockensubstanzgehalt von etwa zu 50 bis etwa 70 Gew.-% der Gesamtzusammensetzung aufweist.

6. Wässrige Beschichtungszusammensetzung nach einem der Ansprüche 1 bis 5, wobei die wässrige Beschichtungszusammensetzung eine Brookfield-Viskosität von etwa 200 bis etwa 500 mPas bei 23 °C bei 100 rpm aufweist; oder wobei die wässrige Beschichtungszusammensetzung eine Brookfield-Viskosität von etwa 300 bis etwa 500 mPas bei 23 °C bei 100 rpm aufweist; oder wobei die wässrige Beschichtungszusammensetzung eine Brookfield-Viskosität von etwa 400 bis etwa 500 mPas bei 23 °C bei 100 rpm aufweist.

7. Wässrige Beschichtungszusammensetzung nach einem der Ansprüche 1 bis 5, wobei die wässrige Beschichtungszusammensetzung eine Brookfield-Viskosität von etwa 300 bis etwa 1800 mPas bei 23 °C bei 100 rpm aufweist; oder wobei die wässrige Beschichtungszusammensetzung eine Brookfield-Viskosität von etwa 300 bis etwa 1500 mPas bei 23 °C bei 100 rpm aufweist; oder wobei die wässrige Beschichtungszusammensetzung eine Brookfield-Viskosität von etwa 300 bis etwa 1200 mPas bei 23 °C bei 100 rpm aufweist; oder wobei die wässrige Beschichtungszusammensetzung eine Brookfield-Viskosität von etwa 300 bis etwa 1000 mPas bei 23 °C bei 100 rpm aufweist; oder wobei die wässrige Beschichtungszusammensetzung eine Brookfield-Viskosität von etwa 500 bis etwa 1800 mPas bei 23 °C bei 100 rpm aufweist; oder wobei die wässrige Beschichtungszusammensetzung eine Brookfield-Viskosität von etwa 500 bis etwa 1500 mPas bei 23 °C bei 100 rpm aufweist; oder wobei die wässrige Beschichtungszusammensetzung eine Brookfield-Viskosität von etwa 500 bis etwa 1200 mPas bei 23 °C bei 100 rpm aufweist; oder wobei die wässrige Beschichtungszusammensetzung eine Brookfield-Viskosität von etwa 500 bis etwa 1000 mPas bei 23 °C bei 100 rpm aufweist; oder wobei die wässrige Beschichtungszusammensetzung eine Brookfield-Viskosität von etwa 350 bis etwa 600 mPas bei 23 °C bei 100 rpm aufweist.

8. Wässrige Beschichtungszusammensetzung nach einem der Ansprüche 1 bis 7, wobei die Zusammensetzung einen Wasserrückhaltewert von etwa 50 bis etwa 400 g/m² aufweist; oder wobei die wässrige Beschichtungszusammensetzung einen Wasserrückhaltewert von etwa 50 bis etwa g/m² aufweist; oder wobei die wässrige Beschichtungszusammensetzung einen Wasserrückhaltewert von etwa 70 bis etwa 250 g g/m² aufweist; oder wobei die wässrige Beschichtungszusammensetzung einen Wasserrückhaltewert von etwa 50 bis etwa 100 g/m² aufweist.

9. Wässrige Beschichtungszusammensetzung nach einem der Ansprüche 1 bis 8, wobei die Zusammensetzung eine Lagerstabilität von mehr als 150 Stunden bei 23 °C vorweist; oder wobei die Zusammensetzung eine Lagerstabilität von mehr als 200 Stunden bei 23 °C vorweist; oder wobei die Zusammensetzung eine Lagerstabilität von mehr als 300 Stunden bei 23 °C vorweist; oder wobei die Zusammensetzung eine Lagerstabilität von mehr als 500 Stunden bei 23 °C vorweist; oder wobei die Zusammensetzung eine Lagerstabilität von mehr als 750 Stunden bei 23 °C vorweist.

10. Wässrige Beschichtungszusammensetzung nach einem der Ansprüche 1 bis 9, wobei die Zusammensetzung, wenn sie auf einem 50 g/m² schweren natürlichen Kraftpapier mit einem Beschichtungsgewicht von 6 g/m² beschichtet wird, eine Beschichtungsflexibilität derart aufweist, dass die Falt-Fettdichtigkeits-Kit-Bewertung nicht unter 5 fällt; oder wobei die Beschichtungszusammensetzung eine Beschichtungsflexibilität derart vorweist, dass die Falt-Fettditchtigkeits-Kit-Bewertung nicht unter 6 fällt, oder die Beschichtungszusammensetzung eine Beschichtungsflexibilität derart vorweist, dass die Falt-Fettdichtigkeits-Kit-Bewertung nicht unter 7 fällt, oder die Beschichtungszusammensetzung eine Beschichtungsflexibilität derart vorweist, dass die Bewertung des Falt-Fettdichtigkeits-Kits nicht unter 8 fällt.

11. Wässrige Beschichtungszusammensetzung nach einem der Ansprüche 1 bis 10, wobei der Talk eine durchschnittliche Teilchengröße von etwa 1 bis 25 µm aufweist; oder wobei der Talk eine durchschnittliche Teilchengröße von etwa 5 bis 20 µm aufweist; oder wobei der Talk eine durchschnittliche Teilchengröße von etwa 8 bis 18 µm aufweist; oder wobei der Talk eine durchschnittliche Teilchengröße von etwa 10 bis 15 µm aufweist.

12. Wässrige Beschichtungszusammensetzung nach einem der Ansprüche 1 bis 11, wobei der Acryllatex aus einem anionischen 100 %igen Acrylcopolymerlatex und einem anionischen Styrolacryllatex ausgewählt ist.

13. Verfahren zum Herstellen der wässrigen Beschichtungszusammensetzung zum Beschichten von faserbasierten Produkten nach einem der Ansprüche 1 bis 12, umfassend:
Solubilisieren der chemisch funktionalisierten, kaltwasserlöslichen, anionischen Stärke in Wasser;
Mischen der solubilisierten, kaltwasserlöslichen Stärke mit dem Talk, um eine wässrige Stärke-/Talkzusammensetzung auszubilden; und
Mischen der wässrigen Stärke-/Talkzusammensetzung mit dem Acryllatex, um die wässrige Beschichtungszusammensetzung auszubilden.

14. Verwendung einer Beschichtungszusammensetzung nach einem der Ansprüche 1 bis 13 bei dem Herstellen eines beschichteten faserbasierten Produkts.

## Revendications

1. Composition aqueuse de couchage pour le couchage de substrats à base de fibres comprenant :
du latex acrylique en une quantité d'environ 48 % en poids à environ 80 % sur la base base d'une teneur en matière sèche de la composition ;
du talc en une quantité d'environ 20 % à environ 50 % sur la base de la teneur en matière sèche de la composition ; et
de l'amidon anionique chimiquement fonctionnalisé, soluble dans l'eau froide, dans une teneur en matière sèche d'environ 0,1 % en poids à environ 10 % en poids ;
dans laquelle la composition aqueuse a une teneur totale en matière sèche d'environ 30 à environ 70 % en poids sur la base du poids de la composition totale, dans laquelle l'amidon anionique chimiquement fonctionnalisé et soluble dans l'eau froide est choisi parmi l'amidon hydroxypropylique, l'amidon carboxyméthylique, l'amidon acétylé à haute teneur en amylose, l'acétate d'amidon, le maléate d'amidon, l'octenylsuccinate d'amidon, le succinate d'amidon, le phtalate d'amidon, l'amidon hydroxypropylique à haute teneur en amylose, l'amidon réticulé, le phosphate d'amidon, le phosphate de diamidon hydroxypropylique, et leurs mélanges.

2. Composition aqueuse de couchage selon la revendication 1, dans laquelle l'amidon anionique chimiquement fonctionnalisé, soluble dans l'eau froide, est présent dans une teneur en matière sèche d'environ 0,1 % en poids à environ 8 % en poids ; ou dans laquelle l'amidon anionique chimiquement fonctionnalisé, soluble dans l'eau froide, est présent dans une teneur en matière sèche d'environ 0,1 % en poids à environ 5 % en poids ; ou dans laquelle l'amidon anionique chimiquement fonctionnalisé, soluble dans l'eau froide, est présent dans une teneur en matière sèche d'environ 0,1 % en poids à environ 2 % en poids.

3. Composition aqueuse de couchage selon la revendication 1 ou 2, dans laquelle
le latex acrylique est présent en une quantité d'environ 60 % en poids à environ 75 % en poids sur la base de la teneur en matière sèche de la composition ; ou le latex acrylique est présent en une quantité d'environ 65 % en poids à environ 75 % en poids sur la base de la teneur en matière sèche de la composition ; et
le talc est présent en une quantité d'environ 20 % en poids à environ 40 % en poids sur la base de la teneur en matière sèche de la composition ; ou le talc est présent en une quantité d'environ 25 % en poids à environ 35 % en poids sur la base de la teneur en matière sèche de la composition.

4. Composition aqueuse de couchage selon l'une quelconque des revendications 1 à 3, dans laquelle le talc et le latex acrylique sont présents dans un rapport talc/ latex acrylique de 1:5 à 1:1 en poids ; ou dans laquelle le talc et le latex acrylique sont présents dans un rapport talc/latex acrylique de 1:4 à 2:5 en poids.

5. Composition aqueuse de couchage selon l'une quelconque des revendications 1 à 4, dans laquelle la composition a une teneur totale en matière sèche d'environ 40 à environ 70 % en poids de la composition totale ; ou dans laquelle la composition a une teneur totale en matière sèche d'environ 50 à environ 70 % en poids de la composition totale.

6. Composition aqueuse de couchage selon l'une quelconque des revendications 1 à 5, dans laquelle la composition aqueuse de couchage a une viscosité Brookfield d'environ 200 à environ 500 mPas à 23 °C à 100 rpm ; ou dans laquelle la composition aqueuse de couchage a une viscosité Brookfield d'environ 300 à environ 500 mPas à 23 °C à 100 rpm ; ou dans laquelle la composition aqueuse de couchage a une viscosité Brookfield d'environ 400 à environ 500 mPas à 23 °C à 100 rpm.

7. Composition aqueuse de couchage selon l'une quelconque des revendications 1 à 5, dans laquelle la composition aqueuse de couchage a une viscosité Brookfield d'environ 300 à environ 1800 mPas à 23 °C à 100 rpm ; ou dans laquelle la composition aqueuse de couchage a une viscosité Brookfield d'environ 300 à environ 1500 mPas à 23 °C à 100 rpm ; ou dans laquelle la composition aqueuse de couchage a une viscosité Brookfield d'environ 300 à environ 1200 mPas à 23 °C à 100 rpm ; ou dans laquelle la composition aqueuse de couchage a une viscosité Brookfield d'environ 300 à environ 1000 mPas à 23 °C à 100 rpm ; ou dans laquelle la composition aqueuse de couchage a une viscosité Brookfield d'environ 500 à environ 1800 mPas à 23 °C à 100 rpm ; ou dans laquelle la composition aqueuse de couchage a une viscosité Brookfield d'environ 500 à environ 1500 mPas à 23 °C à 100 rpm ; ou dans laquelle la composition aqueuse de couchage a une viscosité Brookfield d'environ 500 à environ 1200 mPas à 23 °C à 100 rpm ; ou dans laquelle la composition aqueuse de couchage a une viscosité Brookfield d'environ 500 à environ 1000 mPas à 23 °C à 100 rpm ; ou dans laquelle la composition aqueuse de couchage a une viscosité Brookfield d'environ 350 à environ 600 mPas à 23 °C à 100 rpm.

8. Composition aqueuse de couchage selon l'une quelconque des revendications 1 à 7, dans laquelle la composition a une valeur de rétention d'eau d'environ 50 à environ 400 g/m² ; ou dans laquelle la composition aqueuse de couchage a une valeur de rétention d'eau d'environ 50 à environ g/m² ; ou dans laquelle la composition aqueuse de couchage a une valeur de rétention d'eau d'environ 70 à environ 250 g g/m² ; ou dans laquelle la composition aqueuse de couchage a une valeur de rétention d'eau d'environ 50 à environ 100 g/m².

9. Composition aqueuse de couchage selon l'une quelconque des revendications 1 à 8, dans laquelle la composition présente une stabilité de conservation supérieure à 150 heures à 23 °C ; ou dans laquelle la composition présente une stabilité de conservation supérieure à 200 heures à 23 °C ; ou dans laquelle la composition présente une stabilité de conservation supérieure à 300 heures à 23 °C ; ou dans laquelle la composition présente une stabilité de conservation supérieure à 500 heures à 23 °C ; ou dans laquelle la composition présente une stabilité de conservation supérieure à 750 heures à 23 °C.

10. Composition aqueuse de couchage selon l'une quelconque des revendications 1 à 9, dans laquelle la composition, lorsqu'elle est couchée sur un papier Kraft naturel de 50 g/m² avec un poids de couchage de 6 g/m², a une souplesse de couchage telle que la cote de kit de résistance à la graisse de pliage ne tombe pas en dessous de 5 ; ou dans laquelle la composition de couchage présente une souplesse de couchage telle que la cote de kit de résistance à la graisse de pliage ne descend pas en dessous de 6, ou dans laquelle la composition de couchage présente une souplesse de couchage telle que la cote de kit de résistance à la graisse de pliage ne descend pas en dessous de 7, ou dans laquelle la composition de couchage présente une souplesse de couchage telle que la cote de kit de résistance à la graisse de pliage ne descend pas en dessous de 8.

11. Composition aqueuse de revêtement selon l'une quelconque des revendications 1 à 10, dans laquelle le talc a une taille moyenne de particules comprise entre 1 et 25 µm ; ou dans lequel le talc a une taille moyenne de particules d'environ 5 à 20 µm ; ou dans lequel le talc a une taille moyenne de particules d'environ 8 à 18 µm ; ou dans lequel le talc a une taille moyenne de particules d'environ 10 à 15 µm.

12. Composition aqueuse de couchage selon l'une quelconque des revendications 1 à 11, dans laquelle le latex acrylique est choisi parmi un latex de copolymère acrylique 100 % anionique et un latex de styrène acrylique anionique.

13. Procédé de fabrication de la composition aqueuse de couchage de produits à base de fibres selon l'une quelconque des revendications 1 à 12, comprenant :
la solubilisation dans l'eau de l'amidon anionique chimiquement fonctionnalisé et soluble dans l'eau froide ;
le mélange de l'amidon solubilisé dans l'eau froide avec le talc pour former une composition aqueuse amidon/talc ; et
le mélange de la composition aqueuse d'amidon/talc avec le latex acrylique pour former la composition aqueuse de couchage.

14. Utilisation d'une composition de couchage selon l'une quelconque des revendications 1 à 13 pour la fabrication d'un produit à base de fibres couché.
